Europäisches Patentamt

European Patent Office

Office européen des brevets

(11) Numéro de publication : **0 459 896 B1**

# (12) FASCICULE DE BREVET EUROPEEN

(45) Date de publication du fascicule du brevet :
**08.09.93 Bulletin 93/36**

(51) Int. Cl.$^5$ : **G01N 3/08,** G01N 11/00

(21) Numéro de dépôt : **91401390.9**

(22) Date de dépôt : **29.05.91**

(54) **Procédé de caractérisation du comportement visco-élastique d'un matériau viscoélastique et appareillage pour la mise en oeuvre de ce procédé.**

(30) Priorité : **01.06.90 FR 9006881**

(43) Date de publication de la demande :
**04.12.91 Bulletin 91/49**

(45) Mention de la délivrance du brevet :
**08.09.93 Bulletin 93/36**

(84) Etats contractants désignés :
**AT BE CH DE DK ES FR GB GR IT LI LU NL SE**

(56) Documents cités :
**FR-A- 2 429 423**
**FR-A- 2 491 213**
**US-A- 3 457 779**
**US-A- 4 109 516**
**US-A- 4 383 450**
**SOVIET INVENTIONS ILLUSTRATED, semaine 8816, 21 avril 1988, abrégé no. 88-111046/16, Derwent Publications Ltd, Londres, GB, & SU-A-1339436**

(73) Titulaire : **INSTITUT DE RECHERCHE APPLIQUEE SUR LES POLYMERES( I.R.A.P.) 72, avenue Olivier Messiaen F-72000 Le Mans (FR)**
Titulaire : **CENTRE DE COOPERATION INTERNATIONALE EN RECHERCHE AGRONOMIQUE POUR LE DEVELOPPEMENT (C.I.R.A.D.) 42, rue Scheffer F-75116 Paris (FR)**

(72) Inventeur : **Chasset, René 29Bis Boulevard de Strasbourg F-94130 Nogent Sur Marne (US)**
Inventeur : **Mary, Jean-Luc rue de Touraine F-72190 Saint Pavace (FR)**
Inventeur : **Benoist, Pascale 15, rue de la Pastière F-72000 Le Mans (FR)**
Inventeur : **de Livonniere, Hugues 90, rue du Bac F-75007 Paris (FR)**

(74) Mandataire : **Phélip, Bruno et al c/o Cabinet Harlé & Phélip 21, rue de La Rochefoucauld F-75009 Paris (FR)**

## Description

La présente invention est relative à un procédé de caractérisation du comportement viscoélastique d'un matériau, ainsi qu'à un appareillage permettant la mise en oeuvre de ce procédé. Plus particulièrement, la présente invention est du domaine de la mesure de caractéristiques rhéologiques de corps viscoélastiques, notamment du type des élastomères naturels ou synthétiques et des mélanges élastomériques. L'appareillage et le procédé permettent la détermination simultanée de descripteurs de viscosité et d'élasticité.

Dans l'industrie du caoutchouc, la mise en oeuvre revêt une importance capitale. En fait, elle consiste en une série d'opérations complexes dont la régularité conditionne la qualité et la constance des produits finis : mélangeage de la gomme brute, incorporation de charges et ingrédients, mise en forme, vulcanisation.

Les élastomères et les mélanges élastomériques, matériaux viscoélastiques, lorsqu'ils sont soumis à un état de contrainte, présentent une réponse fonction du temps décomposable en deux termes, l'un visqueux, l'autre élastique. Le premier traduit la plus ou moins grande facilité d'écoulement, le second la tendance plus ou moins marquée de retour vers l'état initial après suppression des contraintes ; tous deux jouent un rôle essentiel dans la plupart des opérations de mise en oeuvre. C'est ainsi que la stabilité dimensionnelle des mélanges après passage dans les extrudeuses et sur les calandres est liée à la composante élastique des mélanges qui se manifeste par une augmentation des dimensions ou "reprise".

Il est donc souhaitable de pouvoir mesurer les deux composantes avec précision et dans une large gamme de vitesses de sollicitation (c'est-à-dire de vitesses de déformation) afin de caractériser aussi complètement que possible les propriétés rhéologiques des mélanges.

Pour déterminer ces grandeurs, plusieurs types d'appareils existent :

- ceux susceptibles de fournir des indications sur la composante visqueuse uniquement, comme le viscosimètre à cisaillement Mooney (décrit dans la norme NFT 43005) ;
- ceux renseignant sur les composantes visqueuse et élastique, comme les plastomètres à plateaux parallèles.

Ces derniers appareils permettent d'évaluer la plasticité et la reprise élastique des caoutchoucs bruts et des mélanges de caoutchouc non vulcanisés. Certains de ces appareils, qui sont d'une conception et d'une utilisation complexes, sont destinés à soumettre les échantillons de matériaux à des efforts de torsion et de cisaillement : c'est notamment le cas de l'appareil objet du brevet US 4.095.461. On connait aussi des appareils qui reposent sur le principe de compression sous charge constante puis de mesure de l'épaisseur de l'éprouvette. Ces appareils peuvent se présenter sous plusieurs variantes, toutes basées sur ce principe, la compression étant obtenue soit par une chute de poids, soit par un ressort. Ils sont décrits dans les normes NFT 43013, NFT 43019, ASTM D926.67 et DIN 53.514. On peut encore citer à titre informatif les appareillages décrits dans les brevets US-4.074.569 et US-4.383.450. Cependant, pour chacun de ces appareils, la vitesse de déformation n'est jamais constante et la déformation n'y est donc pas linéaire en fonction du temps.

Pour mieux caractériser le matériau, il a été proposé, notamment dans le brevet FR 2 429 423, un plastomètre DEFO utilisé en chargement en contrainte alternée de l'éprouvette, ce qui permet d'avoir une mesure de fatigue. Là encore, cette détermination s'effectue avec une vitesse de déformation non contrôlée. La déformation y est en effet provoquée par une charge constante. Il en résulte que la vitesse de déformation varie de façon importante au cours de l'essai. Les grandeurs de viscosité et de reprise élastique qui y sont données sont rapportées à une vitesse moyenne évaluée dans la phase finale de déformation. En outre, au moins deux éprouvettes sont nécessaires pour avoir accès aux caractéristiques rhéologiques.

Or, il est apparu aux sociétés demanderesses que l'étude de la réponse visco-élastique d'un matériau sous l'effet d'une déformation à vitesse constante présentait de nombreux avantages, parmis lesquels, notamment, celui de permettre l'accès à la viscosité apparente du matériau, alors que les solutions proposées jusqu'à présent ne permettaient que la détermination d'un indice de viscosité calculé à partir de vitesses moyennes.

On connaît déjà, notamment par le résumé des revendications de la demande de brevet suédois SU-A-13 39 436 des tests rhéologiques dans lesquels les échantillons sont soumis à des déformations à des vitesses constantes. Néanmoins, les tests qui y sont décrits sont plus particulièrement destinés à l'étude du phénomène de relaxation et ne sont aucunement destinés à caractériser avec un seul essai, à la fois la viscosité et l'élasticité du matériau.

Un but de la présente invention est de proposer un appareillage du type plastomètre à plateaux parallèles, permettant de soumettre un échantillon viscoélastique à une déformation en compression linéaire en fonction du temps dans une large gamme de vitesses. Il permet de suivre dans des conditions fiables et reproductibles l'évolution de la force développée au cours de la déformation, ainsi que la phase de reprise élastique.

Pour ce faire, l'invention a notamment pour objet un appareillage dans lequel la déformation est guidée par le bord d'une came en rotation, cette came étant préférentiellement une came en forme de spirale d'Archimède. Il est à noter que des plastomètres à came étaient déjà connus, notamment par le brevet US-4.109.516. Cependant, ces appareils à came ne sont pas destinés à permettre une déformation à vitesse constante des matériaux traités, mais ont pour objet de permettre un meilleur contrôle des forces de déformation ainsi que de la cinématique de déformation des éprouvettes.

La présente invention permet d'accéder à de nouveaux descripteurs rhéologiques du caoutchouc, qui peuvent apporter des compléments d'information sur la caractérisation des élastomères et sont donc susceptibles d'intéresser aussi bien les producteurs que les manufacturiers dans leur recherche d'un meilleur suivi des délicates opérations de mise en oeuvre. En particulier, le procédé et l'appareillage de l'invention permettent de mesurer, par un seul essai (donc une seule éprouvette), une composante "visqueuse" (grandeur liée à la vitesse de sollicitation) et une composante "élastique" (grandeur liée à la reprise), ces deux paramètres caractérisant les propriétés rhéologiques d'un échantillon à une vitesse de sollicitation donnée. Par ailleurs, le procédé et l'appareillage de l'invention permettent aussi l'introduction, parmi les descripteurs de l'élastomère, de grandeurs associant un paramètre de reprise et un paramètre de viscosité (lié à la déformation à vitesse constante).

Plus particulièrement, dans le procédé de l'invention, on a la possibilité de soumettre l'échantillon à différents types de déformations avant mesure de la reprise élastique :
- une déformation linéaire en fonction du temps ;
- une déformation linéaire en fonction du temps, puis maintien de la déformation à un niveau donné afin de caractériser le phénomène de relaxation (qui est la variation de force en maintien de la déformation) ;
- une déformation linéaire en fonction du temps puis maintien à un niveau de force donnée, afin de caractériser le phénomène de fluage (variation de la déformation sous force constante) ;
- un cycle à vitesse constante entre deux niveaux de déformation ou deux niveaux de force afin de mesurer la reprise élastique d'un matériau ayant subi plusieurs cycles de déformation bien contrôlés.

La mesure de caractéristiques rhéologiques d'un échantillon peut être effectuée pour une large gamme de vitesses (au moins deux décades).

La présente invention a donc pour objet un procédé de caractérisation du comportement viscoélastique d'un matériau viscoélastique, dans lequel :
- on soumet un échantillon dudit matériau à au moins une phase de compression ou de maintien en compression, cette phase étant suivie par une phase de reprise élastique pendant laquelle l'échantillon n'est plus sollicité ;
- on relève des données relatives aux sollicitations auxquelles on soumet ledit échantillon et/ou aux déformations dudit échantillon pendant et après ladite phase de compression ;
- on calcule, à partir de ces données, des paramètres caractéristiques du comportement dudit matériau ; caractérisé en ce que, pendant ladite phase de compression, on soumet ledit échantillon à au moins une déformation à vitesse constante et en ce que les paramètres calculés à partir des données relatives au seul susdit échantillon, caractérisent à la fois la viscosité du matériau et son élasticité.

De façon avantageuse, lors d'une déformation à vitesse constante, on relève, pour un taux de déformation donné, une valeur relative à la sollicitation à laquelle on soumet l'échantillon et l'on calcule, à partir de cette valeur, la viscosité apparente $\eta a$ du matériau. Egalement, l'on peut calculer, à partir de plusieurs valeurs de viscosité apparente $\eta_a$ obtenues pour un même taux de déformation et pour plusieurs vitesses de sollicitation, les valeurs des constantes K et n qui vérifient $\eta_a = Kv^{-n}$, K et n étant les constantes propres à chaque échantillon audit taux de déformation.

Notamment, on calcule une viscosité apparente $\eta a$ du matériau pour un taux maximum de déformation par exemple d'environ 60 %.

De façon préférentielle, on détermine pour la phase de reprise élastique un paramètre de reprise élastique égal à l'augmentation de hauteur de l'échantillon rapportée à la variation de hauteur de l'échantillon au cours de la compression. On peut déterminer le paramètre de reprise élastique de l'échantillon en un temps égal à environ une fois le temps de déformation. On détermine, comme paramètre rhéologique caractéristique du matériau, un paramètre tenant compte de la phase de déformation du matériau et de la phase de reprise élastique.

On peut notamment déterminer un paramètre rhéologique égal pour un taux de compression et une vitesse donnés, au produit ou au rapport des paramètres de reprise élastique et de viscosité apparente. Un paramètre rhéologique est par exemple calculé pour une vitesse de déformation comprise entre 1 % de déformation par seconde et 150 % de déformation par seconde.

De préférence encore, on maintient, après une déformation à vitesse constante, ledit échantillon à un niveau constant de déformation ou de sollicitation. Lors du maintien d'un échantillon à un niveau constant de déformation, on peut relever des données relatives à la relaxation dudit échantillon lors d'une phase de compression, on peut soumettre un échantillon à un cycle de déformation entre deux niveaux prédéterminés de sollicitation et/ou de déformation.

L'invention a aussi pour objet un appareillage permettant la mise en oeuvre de ce procédé.

Avantageusement, cet appareillage comporte un support destiné à recevoir un échantillon, des moyens de compression dudit échantillon sur ledit support actionnés par le mouvement de translation d'un élément de liaison, ledit élément de liaison étant entraîné en translation par contact avec le bord d'une came entraînée en rotation par des moyens moteurs, et comportant aussi des moyens permettant de déterminer la force de compression et/ou la hauteur de déformation.

L'élément de liaison est préférentiellement une tige dont une extrémité porte des moyens de compression d'un échantillon et dont l'autre extrémité est destinée à être en contact avec le bord de la came.

La came a de façon particulièrement avantageuse la forme d'une spirale d'Archimède.

L'appareillage comporte aussi, par exemple, des moyens électro-informatiques permettant la programmation des paramètres de fonctionnement et l'acquisition de données relatives à la déformation des échantillons.

La description qui suit est donnée en référence aux dessins annexés, sur lesquels :

La Figure 1 est un schéma synoptique des moyens électro-informatiques utilisés dans un appareillage conforme à l'invention ;

La Figure 2 est une vue d'ensemble schématique en coupe de la partie mécanique du même appareillage ;

La Figure 3 est une vue de côté schématique d'un détail de la partie mécanique dudit appareillage ;

Les Figures 4 à 7 illustrent quelques types de sollicitation qui peuvent être réalisées à l'aide de l'appareillage des Figures 1 à 3 ;

Les Figures 8 et 9 illustrent des exemples de courbes force/déformation ou reprise élastique/temps obtenues actuellement avec ledit appareillage.

La Figure 10 illustre la correspondance entre une courbe de cinétique de reprise élastique, qui suit une relation déterminée empiriquement, et des valeurs de reprise élastique obtenues expérimentalement.

Les Figures 11 à 14 illustrent les corrélations obtenues entre valeurs des descripteurs propres au procédé conforme à l'invention et des valeurs de paramètres de mise en oeuvre telle que la mesure de gonflement à la filière.

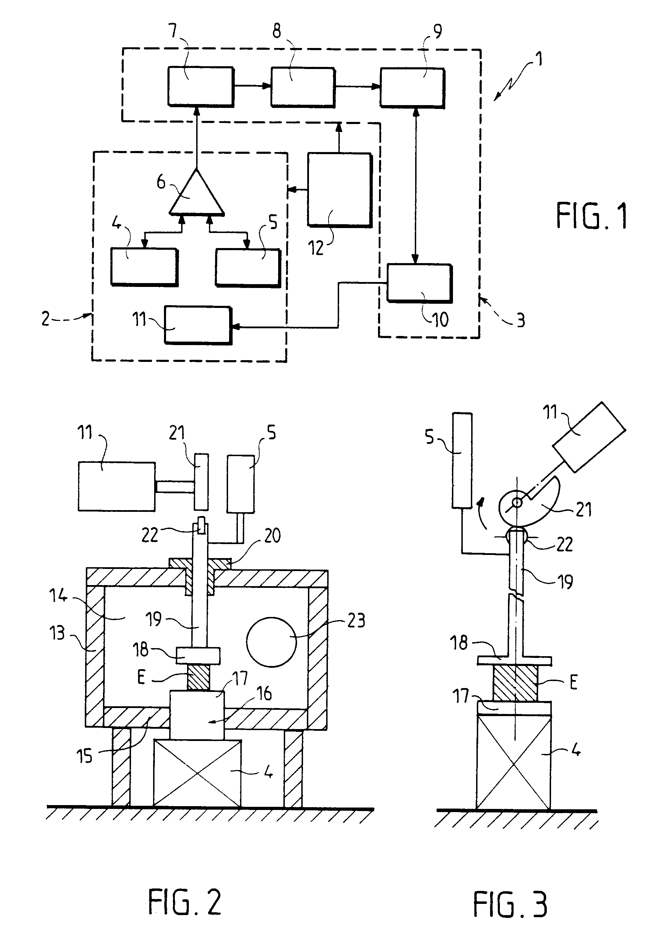

Si l'on se réfère plus particulièrement à la Figure 1, on constate que le schéma synoptique de la chaîne de mesure référencée 1 dans son ensemble, se compose de deux sous-ensembles : le premier, référencé 2, rassemble l'électronique analogique ; le second, référencé 3, rassemble l'électronique numérique. Ces deux circuits 2 et 3 sont alimentés séparément au moyen de circuits spécifiques 12.

L'ensemble analogique 2 se compose d'un capteur de forces à jauges de contraintes 4 et d'un capteur de déplacement linéaire 5, associés à un module de conditionnement et d'amplification 6.

En ce qui concerne l'ensemble numérique 3, les signaux des capteurs 4 et 5 sont injectés dans un module d'amplification et de conversion analogique-numérique douze bits comportant un échantillonneur-amplificateur 7 et un convertisseur analogique-numérique 8. Cette transcription numérique des signaux est ensuite stockée dans la mémoire d'un système informatique 9 pour traitements ultérieurs.

Par ailleurs, le système informatique 9, au travers d'un unité de commande 10, pilote le fonctionnement du moteur pas à pas 11, moyen d'application de l'effort.

On a représenté de façon schématique sur les Figures 2 et 3 la partie mécanique de l'appareillage, qui comprend un bâti 13 dont les parois délimitent essentiellement une enceinte 14 thermostatée par l'intermédiaire d'une ventilation 23 pour une gamme de températures d'utilisation allant de la température ambiante jusqu'à +200°C. Sur l'embase 15, dont est muni ledit bâti 13, repose le capteur de forces 4 monté sous un porte-échantillon 16. La face supérieure de ce dernier correspond au plateau inférieur d'un ensemble constitué de deux plateaux parallèles 17 et 18 destinés à enserrer l'échantillon E à étudier. Ces deux plateaux 17 et 18 ont un diamètre supérieur à celui de l'échantillon E, de façon à induire en compression une déformation du type écoulement radial. Ces plateaux 17 et 18 peuvent néanmoins être remplacés par des plateaux de diamètre moins important, si l'on veut faire subir un autre type de déformation à l'éprouvette E, tel qu'un poinçonnage par exemple.

La déformation est appliquée à l'éprouvette E par l'intermédiaire d'une tige mobile 19 s'étendant partiellement dans l'enceinte 14 jusqu'au plateau 18, qui est monté à l'extrémité de ladite tige mobile 19, perpendiculairement à celle-ci. Ladite tige 19 est guidée par rapport au bâti 13, par un palier à billes 20 qui traverse la partie supérieure dudit bâti 13 et dans lequel coulisse ladite tige 19. Le mouvement de translation de ladite tige est imposé par un moteur pas à pas 11. Ce moteur 11 entraîne, par l'intermédiaire d'une courroie, une came 21 en forme de spirale d'Archimède qui transforme le mouvement circulaire de l'arbre du moteur 11 en un mouvement rectiligne de la tige 19. Le bord de ladite came 21 est en contact avec le bord d'une couronne 22 montée sur roulement à billes à l'extrémité de ladite tige 19 opposée au plateau 18. Le contour de la came 21 ayant la forme d'une spirale d'Archimède, lorsque le moteur tourne à vitesse constante, la déformation de l'éprouvette E est une fonction linéaire du temps.

La déformation de l'échantillon E est suivie par un capteur de déplacement 5 solidaire de la tige 19.

Un essai se déroule selon les séquences suivantes :

- mise en place de l'éprouvette E ;

- paramètrage de l'essai (entre autre : choix de la vitesse et du taux de déformation, de la durée du préchauffage, de la durée du palier...) ;
- préchauffage de l'éprouvette E ;
- approche de la came 21 jusqu'au contact de la tige 19 et de l'éprouvette E ;
- acquisition des données propres à l'éprouvette E (hauteur initiale, par exemple) et calcul théorique de la hauteur en fin de déformation par l'ordinateur ;
- phase de déformation, avec acquisition en parallèle, des valeurs de la force et du déplacement ;
- dégagement quasi-instantané de la came ;
- phase de reprise avec acquisition des valeurs fournies par le capteur de déplacement ;
- traitement des données.

Alors que pour les appareillages connus dans l'art antérieur, le taux de déformation est obtenu généralement par l'intermédiaire de cales, ce qui nécessite l'emploi d'éprouvettes de hauteur parfaitement définie imposant une préparation sophistiquée, l'appareil conforme à l'invention, grâce à son électronique, ajuste les paramètres choisis à la hauteur réelle de l'éprouvette E. La hauteur de l'éprouvette n'a donc pas besoin d'être rigoureusement définie.

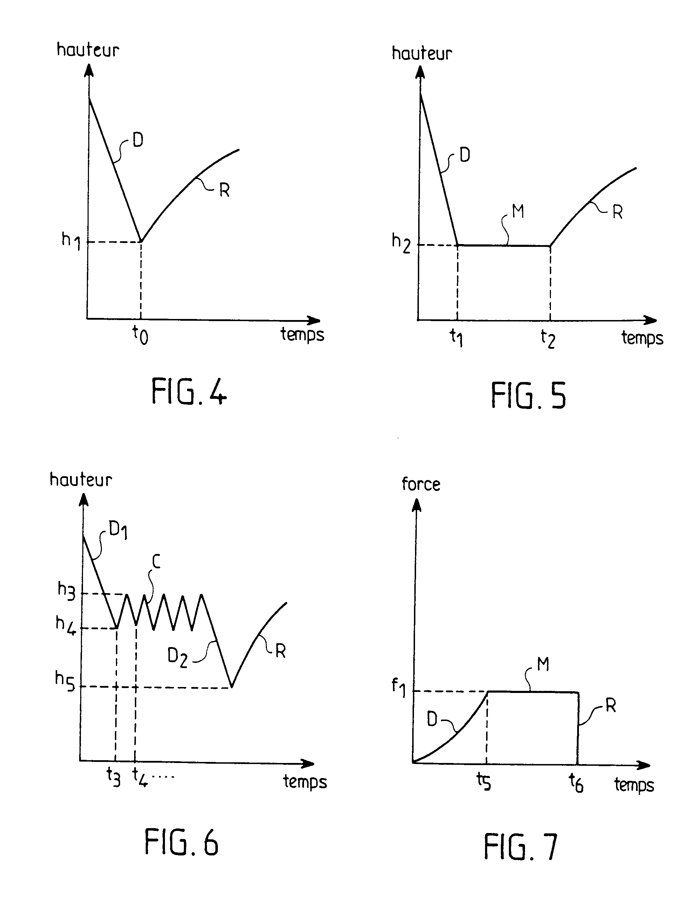

Les Figures 4 à 7 illustrent quelques unes des différentes possibilités non limitatives de sollicitations que l'on peut imposer à une éprouvette, à l'aide de l'appareillage qui vient d'être décrit :

- le premier type de sollicitation (Figure 4) est une déformation linéaire D jusqu'à un temps $t_0$ et une hauteur $h_1$, la vitesse de sollicitation et le taux de déformation étant des paramètres ajustables, cette déformation linéaire étant suivie par une phase R où l'on mesure la reprise élastique, après suppression de la déformation ;
- le second type de sollicitation (Figure 5) correspond à une déformation linéaire D jusqu'à un temps $t_1$ et une hauteur $h_2$, suivie d'un maintien M de la déformation jusqu'à un temps $t_2$, au cours duquel éventuellement on suit la relaxation, puis d'une phase de reprise élastique R, la vitesse de sollicitation, le taux de déformation et la durée du palier étant les paramètres ajustables ;
- le troisième type de sollicitation (Figure 6) inclut après une déformation linéaire $D_1$ jusqu'à un temps $t_3$ et une hauteur $h_4$ un cycle C entre deux hauteurs de déformation $h_3$ et $h_4$, ou éventuellement deux niveaux de force, ce qui permet une sollicitation plus sévère (la vitesse de sollicitation, les taux de déformations entre lesquels se font les cycles, le nombre de cycles étant les paramètres ajustables, le cycle C étant suivi par une nouvelle déformation linéaire $D_2$ de la hauteur $h_3$ jusqu'à la hauteur $h_5$, puis par une reprise élastique R ;
- le quatrième type de sollicitation (Figure 7) correspond à une déformation linéaire D jusqu'à un temps $t_5$ suivie d'un maintien M de l'éprouvette à un niveau de force $f_1$ donné, jusqu'à un temps $t_6$ au cours duquel on suit éventuellement le fluage, la vitesse de déformation, la force à laquelle est effectué le maintien et la durée du palier étant les paramètres ajustables, puis d'une phase de reprise élastique R.

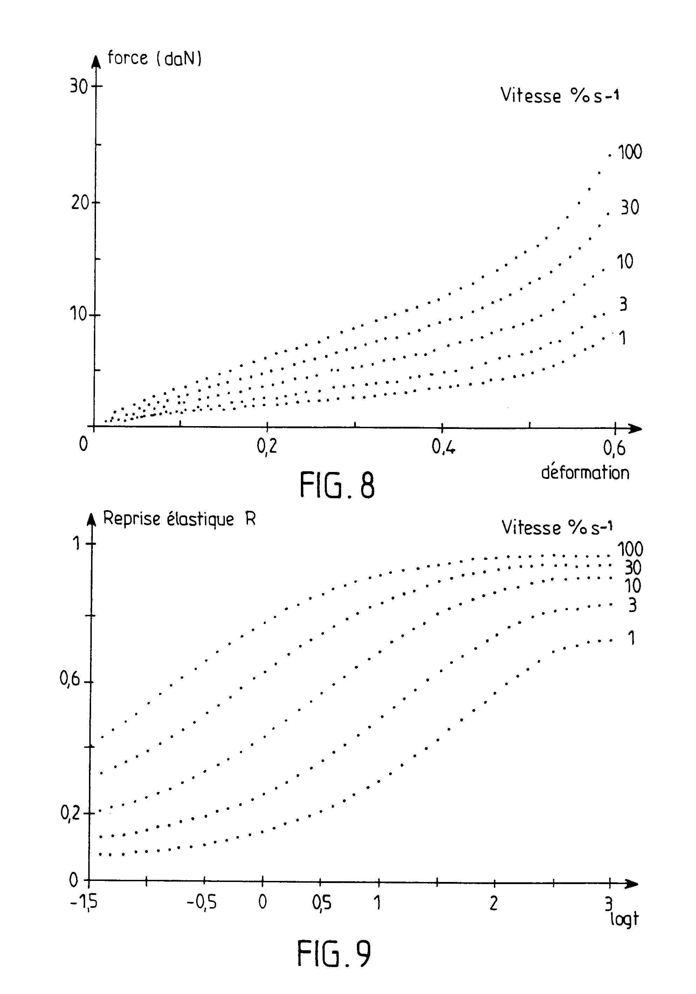

Sur les Figures 8 et 9 sont représentés des exemples d'enregistrement graphique d'essais réalisés avec l'appareillage de l'invention.

En particulier, la Figure 8 représente, pour cinq vitesses couvrant deux décades (de 1 à 100 % de déformation par seconde), la variation de la force durant la déformation. L'échantillon étudié est un élastomère naturel de grade 10. On observe en particulier la non linéarité de la force durant la déformation.

La Figure 9 représente pour les cinq vitesses précédentes la variation de la reprise élastique en fonction du logarithme du temps après suppression de la charge. Les reprises visualisées sur ces courbes sont celles des échantillons dont la phase de déformation est représentée sur la figure 8.

Ainsi que cela a déjà été indiqué, cet appareil permet, par un seul essai, et donc une seule éprouvette, d'avoir accès à la fois à une composante "visqueuse", grandeur liée à la vitesse de sollicitation et à une composante "élastique", grandeur liée à la reprise pour une vitesse de sollicitation donnée.

La détermination de ces paramètres s'effectue de la façon qui va maintenant être décrite.

En ce qui concerne le paramètre visqueux, contrairement à l'appareil décrit dans la demande de brevet FR-2.429.423, qui détermine un indice de viscosité calculé en fonction d'une vitesse de déformation soit moyenne, soit quasi-constante, l'appareil proposé par l'invention permet, grâce aux déformations à vitesse constante qu'il entraîne, d'avoir accès pour un taux de déformation donné à la viscosité apparente $\eta_a$ du matériau ( $\eta_a$ = F/V, F étant la force de déformation relevée par le capteur 4, V étant la vitesse de déformation).

Il a été vérifié que les échantillons d'élastomères étudiés obéissent à la loi puissance de la forme :

$$\eta_a \ = \ Kv^{-n}$$

K, n étant deux constantes propres à chaque échantillon et étant fonction du taux de déformation.

Les valeurs de $\eta_a$ pour des vitesses allant de 1 à 100 % de déformation par seconde, ainsi que les constantes K et n, facilement calculables à partir des essais réalisés avec l'appareil précédemment décrit, peuvent être utilisées comme descripteurs de la viscosité.

En ce qui concerne le paramètre élastique, l'appareil permet de suivre l'évolution de la hauteur de l'éprouvette en fonction du temps. La reprise élastique est définie comme l'augmentation de hauteur de l'éprouvette rapportée à la variation de hauteur de l'échantillon au cours de la déformation.

$$R(t) = \frac{H'(t) - H_1}{H_0 - H_1}$$

avec :

$H_0$ = hauteur initiale de l'éprouvette

$H_1$ = hauteur de l'éprouvette en fin de déformation

$H'(t)$ = hauteur de l'éprouvette au cours de la phase de "reprise"

Cette définition de $R(t)$ présente plusieurs avantages :

- elle tient compte de l'écrasement subi par l'éprouvette, ce qui permet de comparer des reprises obtenues après des taux de déformation différents ;
- elle exprime directement le pourcentage de la déformation qui est récupérée ;
- elle varie de 0 à 1, soit dans un domaine plus large que celui de la hauteur relative.

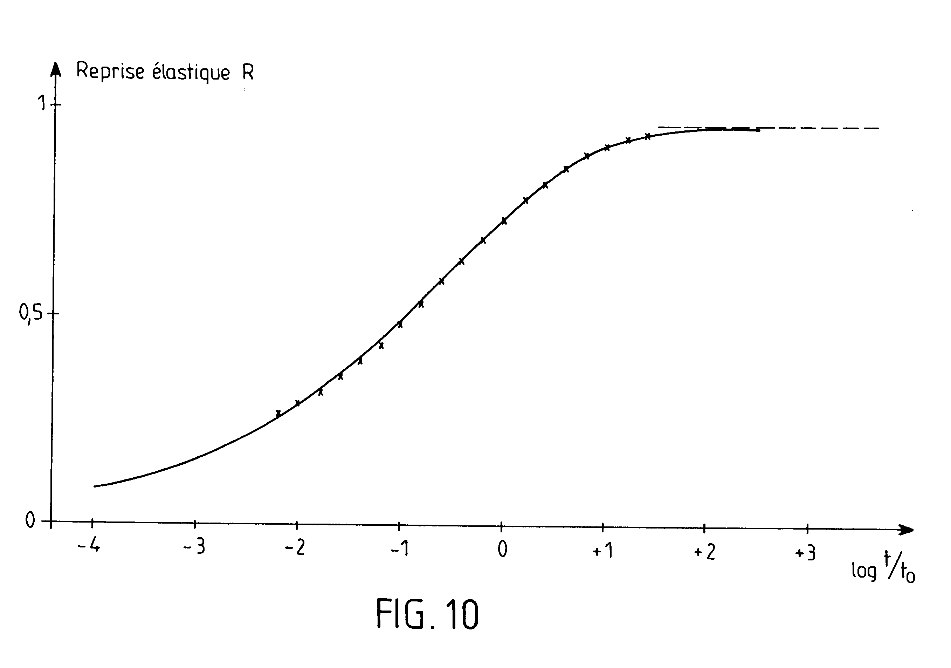

Il a été possible d'établir empiriquement (voir Figure 10) que la cinétique de la reprise élastique suit la relation suivante :

$$R = a \left[ 1 - e^{-\left(\frac{t}{k\,to}\right)^{m}} \right]$$

on a représenté la limite de la reprise élastique en un temps infini, k et m étant des constantes. Pour un caoutchouc naturel de grade 10 (mélange à noir) et pour un essai à une vitesse de 10 % de déformation par seconde, les valeurs déterminées pour ces constantes sont les suivantes :

$a$ = 0,9622

$m$ = 0,3102

$k$ = 0,2875

Cette reprise est généralement mesurée après un temps fonction de la durée de déformation to. Par exemple, elle peut être mesurée après 0,3to, to, 3to et 10to suivant la suppression de la déformation, les valeurs pouvant être utilisées comme descripteurs de l'élasticité.

Par la suite, on appelera $R^1$ la reprise mesurée après un temps égal à une fois le temps de déformation.

L'appareil permettant de déterminer une viscosité apparente correspondant à la déformation globale de l'éprouvette à vitesse constante ainsi que des valeurs de la reprise, il devient possible de calculer, pour une vitesse de déformation donnée, des descripteurs rhéologiques qui associent les paramètres de viscosité et d'élasticité. Ces descripteurs peuvent être, par exemple :

$$(\eta_a \times R^1)_{v\ donnée} \quad \text{ou} \quad \left(\frac{R^1}{\eta_a}\right)_{v\ donnée}$$

Des mesures de reproductibilité ont montré une faible dispersion des résultats, inférieure à 1 % pour les mesures de reprise et de l'ordre de 2 % pour les mesures de viscosité.

L'invention sera encore illustrée par des exemples concrets d'appplication concernant l'utilisation de l'appareillage (élasticimètre) selon l'invention.

Exemples d'exploitation des résultats des mesures effectuées avec l'élasticimètre

Les essais ont été réalisés avec des éprouvettes d'élastomère en gomme homogénéisée ou en mélange à noir, obtenues par moulage.

Dans le cas des gommes brutes, le caoutchouc a été homogénéisé, préalablement au moulage, sur mélangeur à cylindres (norme ISO 1796).

A titre d'exemple, le mélange à noir est préparé selon la formulation suivante (proportions pondérales) :

- caoutchouc 100
- noir de carbone HAF.LS (N326) 30
- plastifiant Dutrex 238 FC 2
- acide stéarique 2
- oxyde de zinc 3

Le mélange a été effectué dans un mélangeur interne de laboratoire du type Werner, puis homogénéisé et tiré en feuilles sur le malaxeur à cylindres.

Le moulage des éprouvettes a été effectué comme suit :

- découpage du caoutchouc en petits morceaux ;
- préchauffage du caoutchouc dans un moule à pistons (faible pression, T=100°C, t=30 min) ;
- mise sous pression (T=100°C, P=230 bars) ;
- refroidissement dans le moule pendant 16 heures ;
- démoulage et stockage dans un dessicateur.

Dimensions finales des éprouvettes :
- diamètre     16 mm
- hauteur     16 mm $\pm$ 1 mm

Les essais avec l'élasticimètre ont été effectués dans les conditions suivantes :
- température de l'enceinte : 70°C ;
- déformation jusqu'à 60 % ;
- vitesse de mise en déformation : 1 à 100 % de déformation par seconde ;
- type de sollicitation : déformation linéaire, puis mesure de la reprise (Figure 4) ;
- enregistrement de la reprise pendant 15 min.

Exemple n°1

Les élastomères étudiés sont d'origine naturelle ou synthétique.

Parmi les descripteurs calculés avec l'élasticimètre, figurent dans le Tableau I les paramètres suivants :

Paramètres de viscosité :
- n exposant de la loi de puissance ;
- k constante de viscosité pour une vitesse de 1 % $s^{-1}$

Paramètres d'élasticité :
- $(R^1)_{v=1}$
  Valeur de la reprise après une durée égale à la durée de déformation, lorsque l'éprouvette a été sollicitée à 1 % de déformation par seconde ;
- $(R^1)_{v=50}$
  Valeur de la reprise après une durée égale à la durée de déformation, lorsque l'éprouvette a été sollicitée à 50 % de déformation par seconde ;
- $(\eta_a \times R^1)_{v=1}$
  Paramètre rhéologique pour une vitesse de sollicitation de 1 % par seconde ;
- $(\eta_a \times R^1)_{v=50}$
  Paramètre rhéologique pour une vitesse de sollicitation de 50 % par seconde.

Des caractéristiques mesurées avec l'élasticimètre pour différents élastomères sont données dans le Tableau I.

## Tableau I

| Echantillons | | C.M. | n | k (N.s.) | $R^1_{v=1}$ | $R^1_{v=50}$ | $(\eta_a \times R^1)_{v=1}$ | $(\eta_a \times R^1)_{v=1}$ |
|---|---|---|---|---|---|---|---|---|
| 1 | GH | 84 | 0,86 | 14.300 | 0,755 | 0,9 | 10.796 | 464 |
| | MN | 65 | 0,82 | 12.400 | 0,615 | 0,798 | 7.626 | 409 |
| 2 | GH | 70 | 0,84 | 12.300 | 0,705 | 0,883 | 8.671 | 409 |
| | MN | 60 | 0,81 | 11.400 | 0,572 | 0,753 | 6.521 | 353 |
| 3 | GH | 59 | 0,84 | 10.700 | 0,652 | 0,765 | 6.976 | 302 |
| | MN | 51 | 0,78 | 9.200 | 0,498 | 0,710 | 4.582 | 324 |
| 4 | GH | 60 | 0,80 | 9.600 | 0,603 | 0,817 | 5.788 | 355 |
| | MN | 43 | 0,78 | 9.000 | 0,507 | 0,692 | 4.563 | 300 |
| 5 | GH | 60 | 0,80 | 8.800 | 0,567 | 0,750 | 4.989 | 295 |
| | MN | 50 | 0,74 | 7.900 | 0,453 | 0,683 | 3.579 | 285 |
| 6 | GH | 65 | 0,82 | 12.000 | 0,648 | 0,867 | 7.776 | 420 |
| | MN | 67 | 0,73 | 7.500 | 0,323 | 0,668 | 2.422 | 206 |
| 7 | GH | 50 | 0,68 | 6.700 | 0,642 | 0,673 | 4.301 | 302 |
| | MN | 63 | 0,73 | 10.800 | 0,603 | 0,640 | 6.512 | 413 |

```
1,2,3,4,5   : caoutchoucs naturels de divers grades
6           : caoutchouc synthétique IR
7           : caoutchouc synthétique SBR
GH          : gomme homogénéisée
MN          : mélange à noir
C.M.        : Consistance Mooney
```

Exemple n°2

Des caoutchoucs naturels commerciaux de même grade ayant subi le même usinage sont considérés comme identiques quant aux spécifications de la norme ISO 2000. Deux caoutchoucs ainsi identiques ont été analysés avec l'élasticimètre. Le Tableau II rassemble leurs caractéristiques mesurées selon la norme ISO 2000 et quelques paramètres de viscosité et d'élasticité mesurées avec l'élasticimètre.

## Tableau II

| Echantillon | Caractéristiques usuelles ISO 2000 | | | Gonflement à la filière | Caractéristiques mesurées avec l'élasticimètre | | | |
|---|---|---|---|---|---|---|---|---|
| | CM | Po | PRI | G | n | k | $R^1_{v=1}$ | $(\eta_a \times R^1)_{v=1}$ |
| Gomme A | 50 | 26,5 | 85 | | 0,73 | 6300 | 0,475 | 2826 |
| homogé-néisée B | 50 | 26,5 | 85 | | 0,81 | 8300 | 0,642 | 4830 |
| Mélange A | 46 | – | – | 0,935 | 0,76 | 7840 | 0,321 | 2517 |
| à noir B | 46 | – | – | 1,107 | 0,77 | 8200 | 0,411 | 3370 |

C.M.   : Consistance Mooney
Po    : Plasticité Wallace
PRI   : Indice de rétention de plasticité

A et B   :  deux caoutchoucs naturels considérés comme identiques selon les spécifications ISO 2000.

Il apparaît donc que deux caoutchoucs identiques selon les spécifications usuelles présentent des différences dans les caractéristiques de viscosité et d'élasticité déterminées à l'élasticimètre, ce qui permet de prévoir des comportements différents lors de la mise en oeuvre.

Exemple n°3

Le gonflement à la filière en sortie d'extrudeuse est un phénomène lié à l'élasticité des mélanges. Il a donc paru intéressant d'examiner comment se classent les paramètres déterminés à l'élasticimètre avec une mesure particulière de gonflement filière réalisée en laboratoire.
Mesure des paramètres élastiques :
La reprise est mesurée après un temps égal à une fois la durée de déformation.
Mesure du gonflement filière :
Les essais sont réalisés sur une extrudeuse de laboratoire dont les caractéristiques sont les suivantes :
Extrudeuse RHEOMEX HAAKE (montée sur un appareil de mesure Rhéocord)
Vis :
diamètre D = 19,05 mm
L/D = 10
Filière :
diamètre D = 4,76 mm
L/D = 3,8
L'essai est réalisé à une température de 75°C avec une vitesse de rotation de la vis de 100 tr/min.
La procédure de mesure s'inspire de la norme ASTM D2330, méthode B.
Le gonflement est donné par :

$$G = \frac{A - Ao}{Ao}$$

où :

Ao est l'aire de la section droite de la filière
A est l'aire moyenne d'une section droite du jonc extrudé.
La moyenne est déterminée par pesée de 3 joncs de longueur définie (1m ± 1mm) découpés après deux heures de repos.

L'étude a été réalisée en gommes homogénéisées et en mélanges à noir sur 7 échantillons de caoutchoucs naturels de grade 5 dans une gamme de consistance Mooney allant de 50 à 84. Le gonflement à la filière n'a été réalisé que sur les mélanges à noir.

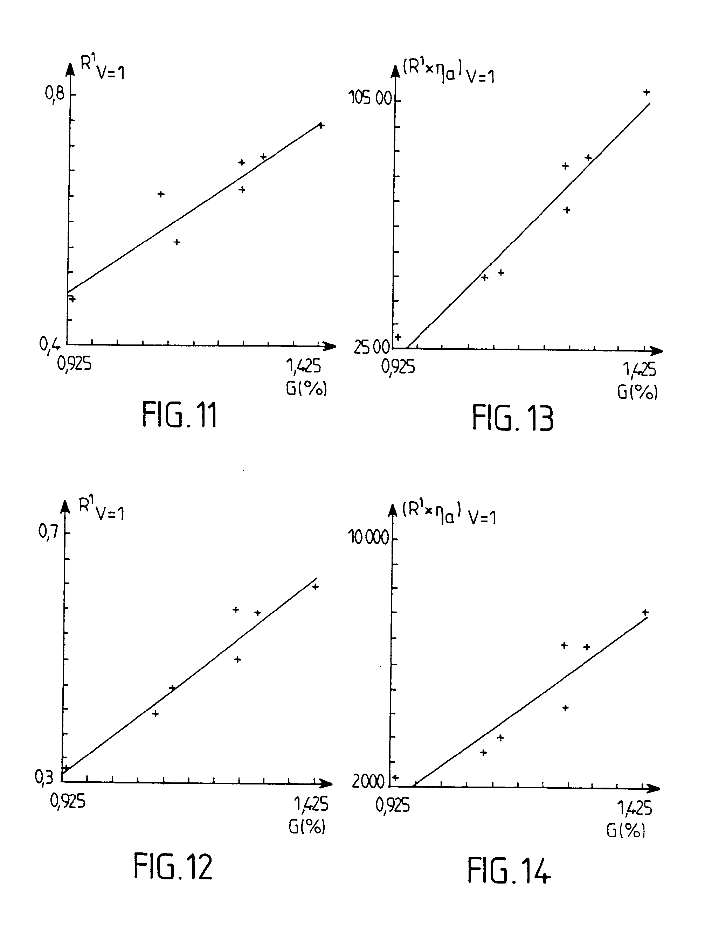

Les Figures 11 et 12 illustrent la corrélation entre le gonflement à la filière sur mélange à noir et la reprise élastique $R^1$ pour une vitesse de 1 % de déformation par seconde, cette reprise élastique étant respectivement calculée sur gomme homogénéisée (Figure 11) et sur mélange à noir (Figure 12).

Les Figures 13 et 14, quant à elles, illustrent la corrélation entre le gonflement à la filière sur mélange à noir et le paramètre rhéologique $\eta_a \times R^1$ pour une vitesse de 1 % de déformation par seconde calculé sur gomme homogénéisée (Figure 13) et sur mélange à noir (Figure 14).

Les coefficients de corrélation obtenus sont donnés dans le Tableau III suivant :

### Tableau III

|  | $R^1_{v=1}$ | $(\eta_a \times R^1)_{v=1}$ |
| --- | --- | --- |
| Reprise sur gomme homogénéisée | 0,943 | 0,975 |
| Reprise sur mélange à noir | 0,968 | 0,934 |

On observe que, dans les conditions opératoires retenues pour la mesure du gonflement à la filière, les corrélations entre le gonflement à la filière et certains paramètres d'élasticité et rhéologiques sont bonnes, notamment pour la gomme homogénéisée.

## Revendications

1. Procédé de caractérisation du comportement viscoélastique d'un matériau viscoélastique, dans lequel:
   - on soumet un échantillon (E) dudit matériau à au moins une phase de compression ou de maintien en compression (D M, $D_1$, C, $D_2$), cette phase étant suivie par une phase de reprise élastique (R) pendant laquelle l'échantillon n'est plus sollicité;
   - on relève des données relatives aux sollicitations auxquelles on soumet ledit échantillon (E) et/ou aux déformations dudit échantillon pendant et après ladite phase de compression;
   - on calcule, à partir de ces données, des paramètres caractéristiques du comportement dudit matériau;
   
   caractérisé en ce que, pendant ladite phase de compression, on soumet ledit échantillon (E) à au moins une déformation à vitesse constante (D, $D_1$, $D_2$) et en ce que les paramètres calculés à partir des données relatives au seul susdit échantillon, caractérisent à la fois la viscosité du matériau et son élasticité.

2. Procédé selon la revendication 1, caractérisé en ce que, lors d'une déformation à vitesse constante (D, $D_1$, $D_2$), on relève, pour un taux de déformation donnée, une valeur relative à la sollicitation à laquelle on soumet l'échantillon et l'on calcule, à partir de cette valeur, la viscosité apparente $\eta_a$ du matériau.

3. Procédé selon la revendication 2, caractérisé en ce que l'on calcule, à partir de plusieurs valeurs de viscosité apparente $\eta_a$ obtenues pour un même taux de déformation et pour plusieurs vitesses de sollicitation, les valeurs des constantes K et n qui vérifient $\eta_a = Kv^{-n}$, K et n étant les constantes propres à chaque échantillon audit taux de déformation.

4. Procédé selon l'une des revendications 2 ou 3, caractérisé en ce qu'on calcule une viscosité apparente $\eta_a$ du matériau pour un taux maximum de déformation.

5. Procédé selon la revendication 4, caractérisé en ce que le taux maximum de déformation est d'environ 60%.

6. Procédé selon l'une quelconque des revendications précédentes, caractérisé en ce qu'on détermine pour la phase de reprise élastique (R) un paramètre de reprise élastique égal à l'augmentation de hauteur de l'échantillon rapportée à la variation de hauteur de l'échantillon au cours de la compression.

7. Procédé selon la revendication 6, caractérisé en ce qu'on détermine le paramètre de reprise élastique de l'échantillon en un temps égal à environ une fois le temps de déformation.

8. Procédé selon les revendications 2 et 6 prises en combinaison, caractérisé en ce qu'on détermine, comme paramètre rhéologique caractéristique du matériau, un paramètre tenant compte de la phase de déformation du matériau et de la phase de reprise élastique.

9. Procédé selon la revendication 8, caractérisé en ce qu'on détermine un paramètre rhéologique égal pour un taux de compression et une vitesse donnés, au produit ou au rapport des paramètres de reprise élastique et de viscosité apparente.

10. Procédé selon la revendication 9, caractérisé en ce qu'un paramètre rhéologique est calculé pour une vitesse de déformation comprise entre 1% de déformation par seconde et 150% de déformation par seconde.

11. Procédé selon l'une quelconque des revendications précédentes, caractérisé en ce qu'on maintient, après une déformation à vitesse constante (D), ledit échantillon (E) à un niveau constant de déformation ($h_2$) ou de sollicitation ($f_1$).

12. Procédé selon la revendication 11, caractérisé en ce que lors du maintien d'un échantillon à un niveau constant de déformation ($_{h2}$), on relève des données relatives à la relaxation dudit échantillon (E).

13. Procédé selon l'une quelconque des revendications précédentes, caractérisé en ce que, lors d'une phase de compression, on soumet un échantillon (E) à un cycle de déformation (C) entre deux niveaux prédéterminés de sollicitation et/ou de déformation.

14. Appareillage permettant la mise en oeuvre du procédé selon l'une des revendications 1 à 13 comprenant un support (17) destiné à recevoir un échantillon (E), des moyens de compression (17, 18) dudit échantillon sur ledit support (17) actionnés par le mouvement de translation d'un élément de liaison (19), ledit élément de liaison étant entraîné en translation par contact avec le bord d'une came (21) entraînée en rotation par des moyens moteur (11), et comportant aussi des moyens (4, 5) permettant de déterminer la force de compression et/ou la hauteur de déformation.

15. Appareillage selon la revendication 14, caractérisé en ce que l'élément de liaison est une tige (19) dont une extrémité porte des moyens de compression (18) de l'échantillon (3) et dont l'autre extrémité est destinée à être en contact avec le bord de la came (21).

16. Appareillage selon l'une quelconque des revendications 14 ou 15, caractérisé en ce que la came (21) a la forme d'une spirale d'Archimède.

17. Appareillage selon l'une quelconque des revendications 14 à 16, caractérisé en ce qu'il comporte des moyens électro-informatiques (2, 3) permettant la programmation des paramètres de fonctionnement et l'acquisition de données relatives à la déformation des échantillons.

## Patentansprüche

1. Verfahren zur Charakterisierung des viskoelastischen Verhaltens eines viskoelastischen Materials, wobei
   - eine Probe (E) des Materials wenigstens einer Phase der Kompression oder des Haltens unter Kompression (D, M, $D_1$, C, $D_2$) unterzogen wird und dieser Phase eine Phase der elastischen Erholung (R) folgt, während der die Probe nicht beansprucht wird;
   - die Daten aufgezeichnet werden, die sich auf die Beanspruchungen beziehen, denen die Probe (E) ausgesetzt wird und/oder auf die Verformungen der Probe während oder nach der Kompressionsphase;
   - ausgehend von diesen Daten charakteristische Parameter des Verhaltens dieses Materials berechnet werden;
dadurch gekennzeichnet, daß die Probe (E) während der Kompressionsphase wenigstens einer Verformung mit konstanter Geschwindigkeit (D, $D_1$, $D_2$) ausgesetzt wird, und daß die Parameter, die ausgehend von den sich nur auf die Probe beziehenden Daten berechnet wurden, zugleich die Viskosität des Materials und seine Elastizität kennzeichnen.

2. Verfahren nach Anspruch 1, dadurch gekennzeichnet, daß bei einer Verformung mit konstanter Geschwindigkeit (D, $D_1$, $D_2$) für ein gegebenes Verformungsverhältnis ein Wert aufgezeichnet wird, der sich auf die Beanspruchung bezieht, welcher die Probe ausgesetzt ist, und daß ausgehend von diesem Wert die tatsächliche Viskosität $\eta_a$ des Materials berechnet wird.

3. Verfahren nach Anspruch 2, dadurch gekennzeichnet, daß ausgehend von mehreren Werten für die tatsächliche Viskosität $\eta_a$, die für einunddasselbe Verformungsverhältnis und für mehrere Beanspruchungsgeschwindigkeiten erhalten wurden, die Werte der Konstanten K und n berechnet werden, die $\eta_a = Kv^{-n}$ erfüllen, wobei K und n die Konstanten sind, die für die jeweilige Probe mit diesem Verformungsverhältnis typisch sind.

4. Verfahren nach einem der Ansprüche 2 oder 3, dadurch gekennzeichnet, daß eine tatsächliche Viskosität $\eta_a$ des Materials für ein maximales Verformungsverhältnis berechnet wird.

5. Verfahren nach Anspruch 4, dadurch gekennzeichnet, daß das maximale Verformungsverhältnis etwa 60% ist.

6. Verfahren nach irgendeinem der vorstehenden Ansprüche, dadurch gekennzeichnet, daß für eine Phase der elastischen Erholung (R) ein Parameter der elastischen Erholung bestimmt wird, der gleich ist der Größenzunahme der Probe im Verhältnis zur Änderung der Größe der Probe im Verlauf der Kompression.

7. Verfahren nach Anspruch 6, dadurch gekennzeichnet, daß der Parameter der elastischen Erholung in einer Zeit bestimmt wird, die gleich ist etwa einmal der Verformungszeit.

8. Verfahren nach den kombinierten Ansprüchen 2 und 6, dadurch gekennzeichnet, daß als rheologischer Parameter, der für das Material charakteristisch ist, ein Parameter bestimmt wird, der die Verformungsphase des Materials und die Phase der elastischen Erholung berücksichtigt.

9. Verfahren nach Anspruch 8, dadurch gekennzeichnet, daß ein rheologischer Parameter für ein gegebenes Kompressionsverhältnis und eine gegebene Geschwindigkeit bestimmt wird, der gleich ist dem Produkt oder dem Verhältnis der Parameter der elastischen Erholung und der tatsächlichen Viskosität.

10. Verfahren nach Anspruch 9, dadurch gekennzeichnet, daß ein rheologischer Parameter berechnet wird für eine Verformungsgeschwindigkeit zwischen 1% Verformung pro Sekunde und 150% Verformung pro Sekunde.

11. Verfahren nach irgendeinem der vorstehenden Ansprüche, dadurch gekennzeichnet, daß die Probe (E) nach Verformung mit konstanter Geschwindigkeit (D) bei einem konstanten Grad der Verformung ($h_2$) oder der Beanspruchung ($f_1$) gehalten wird.

12. Verfahren nach Anspruch 11, dadurch gekennzeichnet, daß beim Halten einer Probe bei einem konstanten Grad der Verformung ($h_2$) Daten aufgezeichnet werden, die sich auf die Relaxation der Probe (E) beziehen.

13. Verfahren nach irgendeinem der vorstehenden Ansprüche, dadurch gekennzeichnet, daß bei einer Kompressionsphase die Probe (E) einem Verformungszyklus (C) zwischen zwei vorbestimmten Graden an Beanspruchung und/oder Verformung unterzogen wird.

14. Vorrichtung für die Durchführung des Verfahrens nach einem der Ansprüche 1 bis 13, umfassend einen Träger (17), der zur Aufnahme der Probe (E) bestimmt ist, Druckeinrichtungen (17,18) für die Probe auf dem Träger (17), die betätigt werden durch die Translationsbewegung eines Verbindungselements (19), wobei das Verbindungselement in Translation versetzt wird durch Kontakt mit dem Rand eines Nockens (21), der durch eine Motoreinrichtung (11) in Drehung versetzt wird, und des weiteren umfassend Einrichtungen (4,5), die die Bestimmung der Kompressionskraft und/oder der Größe der Verformung ermöglichen.

15. Vorrichtung nach Anspruch 14, dadurch gekennzeichnet, daß das Verbindungselement ein Schaft (19) ist, dessen eines Ende die Druckeinrichtungen (18) für die Probe (3) trägt, und dessen anderes Ende für den Kontakt mit dem Rand des Nockens (21) bestimmt ist.

16. Vorrichtung nach einem der Ansprüche 14 oder 15, dadurch gekennzeichnet, daß der Nocken (21) die Form einer archimedischen Schraube aufweist.

17. Vorrichtung nach einem der Ansprüche 14 bis 16, dadurch gekennzeichnet, daß sie elektronische Datenverarbeitungseinrichtungen (2,3) umfaßt, die das Programmieren von Funktionsparametern und die Gewinnung von Daten ermöglichen, die sich auf die Verformung der Proben beziehen.

## Claims

1. Process for characterizing the visco-elastic behaviour of a visco-elastic material, in which:
   - a sample (E) of the said material is subjected to at least one compression phase or holding in compression phase (D, M, $D_1$, C, $D_2$), this phase being followed by an elastic recovery phase (R) during which the sample is no longer acted upon;
   - data are recorded relative to the force applied to the sample (E) and/or the deformations of the said sample during and after the said compression phase;
   - characteristic parameters of the behaviour of the said material are then calculated from these data; characterized in that during the said compression phase, the said sample (E) is subjected to at least one deformation at constant speed (D, $D_1$, $D_2$), and in that the parameters calculated from the data relative to only the above-mentioned sample characterize both the viscosity and elasticity of the material.

2. Process according to claim 1, characterized in that at the time of a deformation at constant speed (D, $D_1$, $D_2$), a value is recorded, for a given deformation rate, relative to the force applied to the sample, and the apparent viscosity $\eta a$ of the material is then calculated from this value.

3. Process according to claim 2, characterized in that from several values of apparent viscosity $\eta a$ obtained for the same deformation rate and for several compression speeds, the values of constants K and n are calculated which verify $\eta a = Kv^{-n}$, K and n being the specific constants of each sample at the said deformation rate.

4. Process according to either one of claims 2 and 3, characterized in that an apparent viscosity $\eta a$ of the material is calculated for a maximum deformation rate.

5. Process according to claim 4, characterized in that the maximum deformation rate is approximately 60%.

6. Process according to any one of the preceding claims, characterized in that an elastic recovery parameter is determined for the elastic recovery phase (R), said parameter being equal to the increase in the height of the sample compared to the variation in height of the sample during compression.

7. Process according to claim 6, characterized in that the elastic recovery parameter of the sample is determined in a time approximately equal to the deformation time.

8. Process according to claims 2 and 6 taken in combination, characterized in that a parameter is determined, as a characteristic rheological parameter of the material, that takes account of the deformation phase of the material and the elastic recovery phase.

9. Process according to claim 8, characterized in that a rheological parameter is determined that is equal to the product or ratio of the elastic recovery and apparent viscosity parameters, for a given compression rate and speed.

10. Process according to claim 9, characterized in that a rheological parameter is calculated for a deformation speed in the range 1 % of deformation per second to 150% of deformation per second.

11. Process according to any one of the preceding claims, characterized in that the said sample (E), after deformation at constant speed (D), is maintained at a constant level of deformation ($h_2$) or applied force ($f_1$).

12. Process according to claim 11, characterized in that when a sample is maintained at a constant deformation level ($h_2$), data is recorded relating to the relaxation of said sample (E).

13. Process according to any one of the preceding claims, characterized in that in the compression phase, a sample (E) is subjected to a deformation cycle (C) between two predetermined levels of applied force and/or deformation.

14. Apparatus for making use of the process according to any one of claims 1 to 1 , comprising a support (17) intended to receive a sample (E), means for compressing the said sample (17, 18) on the said support (17) actuated by the movement of translation of a connecting element (19), said connecting element being driven in translation by contact with the edge of a cam (21) driven in rotation by motor means (11), and also comprising means (4, 5) allowing the compression force and/or deformation height to be determined.

15. Apparatus according to claim 14, characterized in that the connecting element is a rod (19) of which one end carries the means (18) for compressing the sample (3) and whose other end is intended to be in contact with the edge of the cam (21).

16. Apparatus according to either one of claims 14 and 15, characterized in that the cam (21) is in the form of an Archimedes screw.

17. Apparatus according to any one of claims 14 to 16; characterized in that it comprises electro-data processing means (2, 3) allowing the programming of working parameters and acquisition of data relating to the deformation of samples.

FIG.1

FIG.2

FIG.3

FIG. 4

FIG. 5

FIG. 6

FIG. 7

FIG. 8

FIG. 9

FIG. 10

EP 0 459 896 B1

FIG.11

FIG.13

FIG.12

FIG.14